# EUROPEAN PATENT SPECIFICATION

(11) **EP 1 120 299 B1**
(45) Date of publication and mention of the grant of the patent: **21.04.2004**
(21) Application number: 01100701.0
(22) Date of filing: 12.01.2001
(51) Int. Cl.: B60G 7/00, B60G 9/00, F16F 1/38, F16B 37/00, F16C 11/06

(54) **Mounting structure for suspension V-Rod**
Montageanordnung für den Dreieckslenker einer Aufhängung
Structure de montage pour un triangle de suspension

(30) Priority: 25.01.2000 JP 2000015899
(43) Date of publication of application: 01.08.2001
(73) Proprietor: Hino Motors, Ltd., Hino-shi, Tokyo 191-8660 (JP)
(72) Inventor: Toyoshima, Kazuo, c/o Hino Motors, Ltd., Hino-shi, Tokyo 191-8660 (JP); Koga, Yoshiyuki, c/o Hino Motors, Ltd., Hino-shi, Tokyo 191-8660 (JP)
(74) Representative: LOUIS- PÖHLAU- LOHRENTZ

(56) References cited:
- DE-U- 9 218 307
- US-A- 4 202 564
- US-A- 5 222 441
- PATENT ABSTRACTS OF JAPAN vol. 2000, no. 02, 29 February 2000 (2000-02-29) & JP 11 321260 A (NHK SPRING CO LTD), 24 November 1999 (1999-11-24)
- PATENT ABSTRACTS OF JAPAN vol. 016, no. 422 (M-1305), 4 September 1992 (1992-09-04) & JP 04 143110 A (NISSAN MOTOR CO LTD), 18 May 1992 (1992-05-18)

## Description

### BACKGROUND OF THE INVENTION

The present invention relates to a mounting structure for a suspension V-rod for use in a large-sized motor vehicle such as a truck or a bus.

A mounting structure for a suspension V-rod corresponding to the preamble of Claim 1 is known for example from DE-U-9218307.

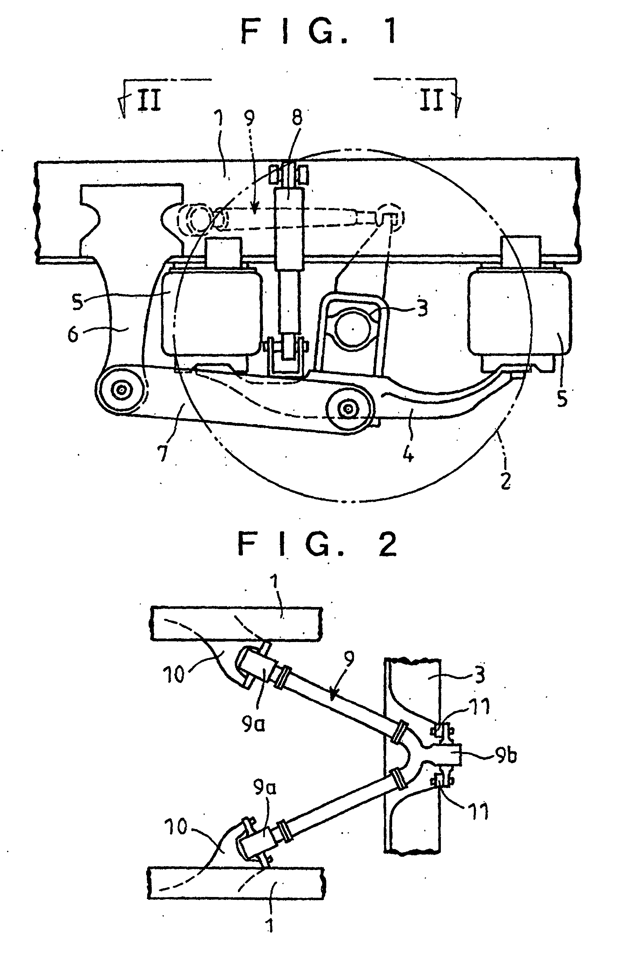

Figs. 1 and 2 show a conventional rear suspension structure in a motor vehicle such as a large-sized truck having two rear wheel axles. In the structure shown, an axle 3 is arranged under a pair of right and left frames 1 which extend along the front-rear direction (the left-to-right direction in Fig. 1) or longitudinally of a vehicle body. The axle 3 extends widthwise or laterally of the vehicle body (the top-bottom direction in Fig. 2) to rotatably support wheels 2 at opposite ends of the axle 3. The axle 3 has support beams 4 integrally assembled to a lower surface of the axle 3 adjacent the ends of the axle 3. Front and rear air springs 5 for absorbing vertical vibrations are interposed between front and rear ends of the support beams 4 and undersurfaces of the frames 1, respectively.

Brackets 6 extending downward are mounted on the frames 1 forwardly of the front air springs 5. Lower ends of the brackets 6 are tiltably connected to intermediate portions of the support beams 4 through lower torque rods 7 which also serve as stabilizers for enhancing anti-roll rigidity of the vehicle body.

Intermediate portions of the lower torque rods 7 are connected to the frames 1 directly thereabove through vertically extending shock absorbers 8, so that the shock absorbers 8 suppress vertical vibration rebounds to achieve vibration damping.

As clearly seen from Fig. 2, a top center of the axle 3 is connected to inside surfaces of the flames 1 through a V-rod 9 which serves as upper torque rod. More specifically, branched front ends 9a of the V-rod 9 are connected to brackets 10 extending from the inside surfaces of the frames 1. A rear, central bent end 9b of the V-rod 9 is connected to brackets 11 on the top center of the axle 3.

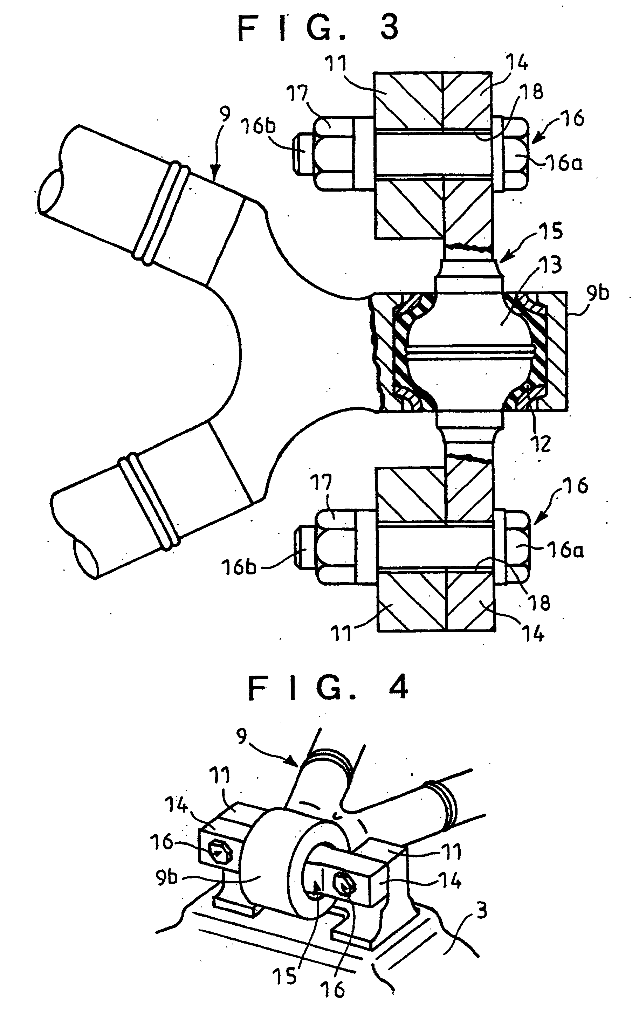

Figs. 3 and 4 show details of the bent end 9b of the V-rod 9 connected to the axle 3. The bent end 9b carries an oscillating pin 15 extending therethrough; the pin 15 is oscillatably held at its spherical center portion 13 via a rubber bush 12 by the bent end 9b of the V-rod 9 as a hub. The pin 15 has opposite ends 14 extending outward and laterally of the vehicle body. The ends 14 of the pin 15 are aligned with and fastened to rear surfaces of the brackets 11 on the axle 3 by a plurality of pairs (two pairs, in the shown example) of bolts 16 and nuts 17 longitudinally of the vehicle body.

The branched ends 9a of the V-rod 9 are connected to the frames 1 in a manner substantially similar to the above-described connection of the bent end 9b of the V-rod 9 to the axle 3, except for difference in shape of the mating parts or brackets 10 to be connected. Accordingly, description thereon will be omitted.

Adoption of such V-rod 9 will contribute to coping with any inputs both longitudinally and laterally of the vehicle body. This eliminates the necessity for those lateral rods against any lateral inputs which may be required in a case where parallel-link-type torque rods are adopted.

However, such a conventional suspension structure with a V-rod is disadvantageous in that lateral inputs, which will act in parallel with those bearing surfaces of the ends 14 of the pin 15 and of the brackets 11 against which heads 16a of the bolts 16 and the nuts 17 are pressed, tend to cause lateral slips on the bearing surfaces, resulting in drop of the fastening forces.

More specifically, shanks 16b of the bolts 16 are inserted to bolt holes 18 drilled through the ends 14 of the pin 15 and brackets 11. To ensure insertion of the shanks 16b of the bolts 16 to the bolt holes 18, the bolt holes 18 have to be made slightly greater than the shanks 16b of the bolts 16. This inevitably entails slight gaps between the bolt holes 18 and the shanks 16b of the bolts 16, and hence the respective bearing surfaces of the ends 14 of the pin 15 and of the brackets 11 may undergo lateral slips depending upon the slight gaps.

Conventionally, such lateral slips may only be reduced by increasing frictional forces on the bearing surfaces. Therefore, in order to minimize the lateral slips generated depending upon bearing surface conditions, excessive fastening forces are required for the bolts 16 and nuts 17. This may lead to troublesome torque control in the fastening of the bolts 16 and nuts 17, resulting in great hindrance in obtaining high maintainability.

The invention was made in view of the above and has its object to provide a mounting structure of a suspension V-rod which can establish firm connection of the V-rod to an axle merely by fastening with unexcessive proper torque, so that drop of the fastening force due to lateral slips on the bearing surfaces can be avoided and higher maintainability than heretofore can be obtained.

Document JP-A-11-321260 discloses a mounting structure for a longitudinal suspension rod connecting the end of an axle to the vehicle frame, comprising an oscillating pin having a central portion oscillatably held by a cylindrical end portion of the suspension rod as a hub, the pin having opposite ends extending laterally outward, a plurality of brackets on the axle, the ends of the pin being aligned with the brackets longitudinally of the vehicle body, and a plurality of pairs of bolts and nuts for fastening the ends of the pin to the brackets longitudinally of the vehicle body. Furthermore from this document it is known to provide the bolt head of the bolt and the bolt hole with a tapered portion such that the mating bolt hole is complementarily tapered to snugly receive the tapered bolt head, in order to facilitate the assembly of the suspension rod.

From document US-A-5 222 441 it is known to provide, in a mounting structure for connecting two parts of a railroad car truck, a nut and bolt head with oppositely tapered portions which matingly engage with respective tapered seat portions in a hole provided in each of the two parts, in order to ensure that the two parts are held firmly in compressive engagement even after extended use of the truck.

### BRIEF SUMMARY OF THE INVENTION

The invention provides a mounting structure of a suspension V-rod which connects a center of an axle to right and left frames, comprising an oscillating pin having a central portion oscillatably held by a central bent end of the V-rod as a hub, said pin having opposite ends extending outward and laterally of a vehicle body, brackets on the center of the axle, said ends of the pin being aligned with the brackets longitudinally of the vehicle body, and a plurality of pairs of bolts and nuts for fastening the ends of the pin to the brackets longitudinally of the vehicle body, at least one pair of bolt and nut among said plurality of pairs of bolts and nuts and the bolt hole mating with said at least one pair being tapered such that a bold head of the bolt and the nut have tapered portions formed on opposed end faces thereof and gradually decreasing in diameter toward each other and that the mating bolt hole is complementarily tapered to snugly receive said tapered bolt head and said tapered nut.

Accordingly, when the ends of the oscillating pin carried by the V-rod are fastened to the brackets on the axle by the bolts and nuts, said at least one pair of bolt and nut are snugly received at their tapered portions by the complementarily tapered bolt hole, respectively, with no gap. Thus, simply applying unexcessive proper torque to the bolts and nuts provides high fastening strength due to a wedge effect of the tapered pair of bolt and nut with the mating bolt hole.

The tapered inner peripheries or portions of the mating bolt hole provides bearing surfaces for the tapered portions of the tapered bolt and nut, respectively. As a result, the tapered portions of the tapered bolt and nut are interfered with the tapered bearing surfaces of the bolt hole, respectively, so that any inputs laterally of the vehicle body are received with reliability. This prevents any disadvantageous lateral slips due to lateral inputs from being generated on the bearing surfaces.

Adoption of such a lateral-slip preventive structure using no frictional force will eliminate the necessity for the bolts and nuts to be tightened or fastened under excessive forces. Therefore, it becomes possible to establish firm connection of the V-rod to the axle by merely applying proper torque.

A preferred embodiment of the invention will be described with reference to the drawings.

### BRIEF DESCRIPTION OF THE DRAWINGS

Fig. 1 is a side view showing a conventional rear suspension structure;
Fig. 2 is a view looking in the direction of arrows II in Fig. 1;
Fig. 3 is an enlarged view partly in section of Fig. 2;
Fig. 4 is a perspective view of Fig. 3; and
Fig. 5 is a plan view partly in section showing an embodiment of the invention.

### DETAILED DESCRIPTION OF THE PREFERRED EMBODIMENT

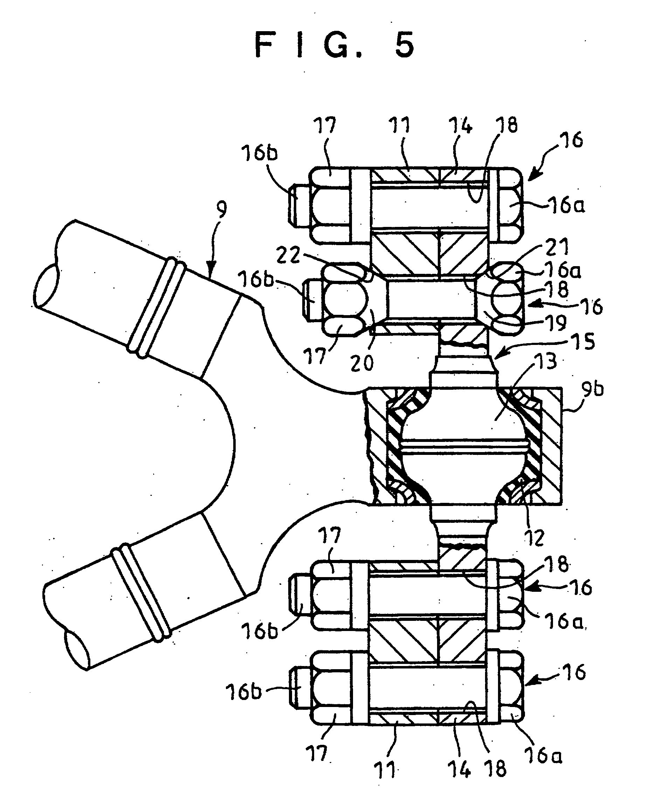

Fig. 5 is a view showing an embodiment of the invention in which reference numerals identical to those in Figs. 1-4 represent the same parts.

In the embodiment shown, a mounting structure of a suspension V-rod 9 which connects a center of an axle 3 to right and left frames 1 comprises an oscillating pin 15 held by a bent end 9b of the V-rod 9, brackets 11 on a top center of the axle 3, ends 14 of the pin 15 being aligned with the brackets 11 longitudinally of a vehicle body, and a plurality of pairs of bolts 16 and nuts 17 for fastening the ends 14 of the pin 15 to the brackets 11. Among the pairs of bolts 16 and nuts 17, at least one pair of bolt 16 and nut 17 are configured as detailed below.

More specifically, in the embodiment shown, two pairs of bolts 16 and nuts 17 for each end 14 of the pin 15, that is, totally four pairs of bolts 16 and nuts 17 are used to fasten the pin 15 to the brackets 11 on the axle 3. Among these pairs of bolts 16 and nuts 17, a pair of bolt 16 and nut 17 are tapered such that a head 16a of the bolt 16 and the nut 17 have tapered portions 19 and 20, respectively, formed on their opposed end faces and gradually decreasing in diameter toward each other. Moreover, a bolt hole 18 mating with the tapered bolt 16 and nut 17 has, at its ends, tapered portions 21 and 22 complementary to the tapered portions 19 and 20 of the bolt 16 and nut 17, respectively.

Accordingly, when the ends 14 of the pin 15 carried by the V-rod 9 are fastened to the brackets 11 on the axle 3 by the bolts 16 and nuts 17, the tapered portions 19 and 20 of the pair of tapered bolt 16 and nut 17 are snugly received by the tapered portions 21 and 22 of the tapered bolt hole 18, respectively, with no gap. Thus, simply applying unexcessive proper torque to the bolts 16 and nuts 17 provides high fastening strength due to a wedge effect of the tapered pair of bolt 16 and nut 17 with the mating bolt hole 18.

The tapered inner peripheries or portions 21 and 22 of the mating bolt hole 18 provides bearing surfaces for the tapered portions 19 and 20 of the tapered bolt 16 and nut 17, respectively. As a result, the tapered portions 19 and 20 of the tapered bolt 16 and nut 17 are interfered with the tapered bearing surfaces 21 and 22 of the bolt hole 18, respectively, so that any inputs laterally of the vehicle body are received with reliability. This prevents any disadvantageous lateral slips due to lateral inputs from being generated on the bearing surfaces.

Adoption of such a lateral-slip preventive structure using no frictional force will eliminate the necessity for the bolts 16 and nuts 17 to be tightened or fastened under excessive forces: Therefore, it becomes possible to establish firm connection of the V-rod 9 to the axle 3 by merely applying proper torque.

Thus, according to the embodiment described above, mere tightening or fastening with unexcessive proper torque will establish firm connection of the V-rod 9 to the axle 3 and avoid generation of lateral slips on the bearing surfaces for the heads 16a of the bolts 16 and the nuts 17. This can avoid drop of the fastening force due to lateral slips on the bearing surfaces and facilitate the torque control to drastically improve maintainability.

It is to be understood that the inventive mounting structure of a suspension V-rod is not limited to the above embodiment and that various changes and modifications may be made without departing from the scope and spirit of the invention. For example, two or more pairs of bolts and nuts and bolt holes mating therewith may be tapered.

## Claims

1. A mounting structure of a suspension V-rod (9) which connects a center of an axle (3) to right and left frames (1), comprising an oscillating pin (15) having a central portion oscillatably held by a central bent end (9b) of the V-rod as a hub, said pin (15) having opposite ends (14) extending outward and laterally of a vehicle body, brackets (11) on the center of the axle, said ends (14) of the pin (15) being aligned with the brackets (11) longitudinally of the vehicle body, and a plurality of pairs of bolts (16) and nuts (17) for fastening the ends (14) of the pin (15) to the brackets (11) longitudinally of the vehicle body, **characterised in that** at least one pair of bolt (16) and nut (17) among said plurality of pairs of bolts (16) and nuts (17) and the bolt hole (18) mating with said at least one pair, are tapered such that a bolt head (16a) of the bolt (16) and the nut (17) have tapered portions (19, 20) formed on opposed end faces thereof and gradually decreasing in diameter toward each other and that the mating bolt hole (18) is complementarily tapered to snugly receive said tapered bolt head (16a) and said tapered nut (17).

## Patentansprüche

1. Montageanordnung für den Dreieckslenker (9) einer Aufhängung, die die Mitte einer Achse (3) mit rechten und linken Rahmen (1) verbindet, die einen pendelnden Bolzen (15) umfasst mit einem Mittelteil, das pendelnd von einem zentralen Krümmungsende (9b) des Dreiecklenkers als Nabe gehaltenen wird, bei dem der Stift (15) entgegengesetzte Enden (14) aufweist, die nach außen und seitlich aus einem Fahrzeugaufbau herausragen, mit Trägern (11) auf der Mitte der Achse, wobei die Enden (14) des Stiftes (15) nach den Trägern (11) der Länge des Fahrzeugaufbaus nach ausgerichtet sind, und mit einer Vielzahl von Paaren von Schraubbolzen (16) und Muttern (17) zur Befestigung der Enden (14) des Stiftes (15) an den Trägern (11) der Länge des Fahrzeugaufbaus nach, **dadurch gekennzeichnet, dass** zumindest ein Paar der Schraubbolzen (16) und Muttern (17) unter der Vielzahl der Paare der Schraubbolzen (16) und Muttern (17) und das mit diesem zumindest einem Paar zusammen passende Bolzenloch (18) konisch geformt sind, so dass ein Bolzenkopf (16a) des Schraubbolzens (16) und die Mutter (17) konische Abschnitte (19, 20) haben, die an den gegenüber liegenden Endflächen davon geformt sind und allmählich im Durchmesser zueinander abnehmen, und dass das passende Bolzenloch (18) sich dazu ergänzend konisch geformt ist, um den konischen Bolzenkopf (16a) und die konische Mutter (17) passend aufzunehmen.

## Revendications

1. Structure de montage d'une barre de suspension en V (9) qui relie le centre d'un essieu (3) à des longerons droit et gauche (1), comprenant une broche oscillante (15) comportant une partie centrale maintenue avec possibilité d'oscillation par une extrémité courbée centrale (9b) de la barre en V sous la forme d'un moyeu, ladite broche (15) comportant des extrémités opposées (14) s'étendant vers l'extérieur et latéralement par rapport à la caisse d'un véhicule, des supports (11) sur le centre de l'essieu, lesdites extrémités (14) de la broche (15) étant alignées avec les supports (11) longitudinalement par rapport à la caisse du véhicule, et une pluralité de paires de boulons (16) et d'écrous (17) destinés à fixer les extrémités (14) de la broche (15) sur les supports (11) longitudinalement par rapport à la caisse du véhicule, **caractérisée en ce qu'**au moins une paire de boulon (16) et d'écrou (17) parmi la ladite pluralité de paire de boulons (16) et d'écrous (17) et le trou pour boulon (18) correspondant à ladite au moins une paire, sont effilés ou taillés en cône de sorte qu'une tête de boulon (16a) du boulon (16) et l'écrou (17) comportent des parties effilées ou taillées en cône (19, 20) formées sur leurs faces d'extrémité opposées et diminuant progressivement en diamètre l'un vers l'autre et **en ce que** le trou pour boulon correspondant (18) est effilé ou taillé de façon complémentaire pour recevoir de façon affleurante ladite tête de boulon effilée ou taillée en cône (16a) et ledit écrou effilé ou taillé en cône (17).
